# EUROPEAN PATENT APPLICATION

(11) **EP 4 585 053 A1**
(43) Date of publication of application: **16.07.2025**
(21) Application number: 24150988.4
(22) Date of filing: 09.01.2024
(51) Int. Cl.: A23L 27/20, A23L 27/21, A23L 27/26, A23L 27/00, A23L 29/00, A23L 33/175, C12P 7/26

(54) **PROCESS FOR PREPARING A FLAVOUR COMPOSITION**

(71) Applicant: Givaudan SA, 1214 Vernier (CH)
(72) Inventor: The designation of the inventor has not yet been filed
(74) Representative: Global Patents

(57) **Abstract**

A method for preparing a flavour composition, comprising the steps of
a) providing a mixture of
i) cysteine, and
ii) acetoin; and

b) reacting said mixture to a flavor composition;
wherein the flavour composition comprises at least one or more compounds selected from the group consisting of 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine. The flavor composition is a meat flavor composition, in particular a ham and pork flavor composition.

## Description

### TECHNICAL FIELD

The present invention relates generally to a method for preparing a flavour composition, in particular flavor compositions contributing to ham and pork flavor. The invention further relates to novel flavor compositions comprising said flavour composition, and also to consumer products foodstuffs and beverages comprising said flavour composition.

### BACKGROUND

It is known to use flavor compounds and compositions to products like foodstuff and beverages to improve their taste. However, there remains a need for new and improved flavor compounds and compositions.

For example, this is the case in the field of plant based products which should mimic or substitute meat. Such products are based on vegetable ingredients which have different properties, for example a different aroma, taste, texture etc. To improve the properties of those products, compounds having a flavor related to meat can be added. Meat flavors can also be useful for other products like bouillons, processed meat or hybrid meat plant proteins.

It is the aim of the present invention to provide a method for preparing a flavour composition that provides a positive contribution to the overall flavor impression of foodstuffs and beverages in which it is incorporated. Said flavor composition is a ham and pork flavor composition.

### SUMMARY

In accordance with a first aspect of the present invention there is provided a method for preparing a flavour composition.

In accordance with a second aspect of the present invention there is provided a flavour mixture comprising the flavour composition obtained by the method of the present invention.

In accordance with a third aspect of the present invention there is provided a product selected from foodstuffs and beverages, comprising the flavour composition obtained by the method of the present invention.

In accordance with a fourth aspect of the present invention there is provided a method to confer, enhance, improve or modify the flavor properties of a flavor mixture or a consumer product.

Certain embodiments of any aspect of the present invention may provide one or more of the following advantages:
- a feasible method to provide a ham and pork flavor composition;
- simple and readily available starting materials;
- obtained composition is suitable for vegetarian and vegan products;
- obtained composition is available in natural quality.

The details, examples and preferences provided in relation to any particular one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

The present invention is based on the surprising finding that by reacting a mixture of i) cysteine and ii) acetoin a flavor composition can be provided. Said flavor composition is suitable for use as meat flavor composition, in particular as ham and pork flavor composition.

There is therefore provided herein a method for preparing a flavour composition comprising the steps of
a) providing a mixture of
   i) cysteine, and
   ii) acetoin; and
b) reacting said mixture to a flavor composition;
wherein the flavor composition comprises at least one or more compounds selected from the group consisting of 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine.

The flavor composition has a flavor reminiscent of meat, in particular of pork meat and sweet cooked ham flavor. It can be obtained in a simple process, under mild conditions and from readily available compounds.

Throughout this document the terms "taste" and "flavor" are used interchangeably to describe the sensory impact that is perceived via the mouth, especially the tongue, and the olfactory epithelium in the nasal cavity.

Cysteine (CAS No.: 52-90-4) is an α-amino acid, present in food, and is available from animal sourced proteins like keratin, or by fermentation of plant-based raw materials in the presence of inorganic trace elements. Cysteine can be used as such, or in the form of the corresponding hydrochloride, in racemic, in enantio-enriched or enantiopure form. For example, it can be used in the form of L-Cysteine· HCl (CAS No.: 7048-04-6).

Acetoin (3-hydroxybutanone, CAS No.: 513-86-0) can be obtain by chemical processes, or by enzymatic fermentation of carbohydrates. It can be used in racemic, in enantio-enriched or enantiopure form.

For example, there is provided a mixture of Cysteine and Acetoin that consists of the racemates of the two starting materials.

Alternatively, said compounds can be used in enantio-enriched or enantiopure form.

For example, there is provided a mixture of L-Cysteine· HCl and racemic Acetoin.

The compounds comprised in the flavor composition obtained by the method of the present invention may contain stereo centers, and the compounds are a single isomer, for example an enantiomer or a diastereomer, or a mixture of more than one isomer.

For example, the flavor composition comprises at least one or more compounds selected from the group consisting of 2,4,5-trimethyl-3-oxazoline, 2,4,5-trimethylthiazole, and tetramethylpyrazine.

For example, the flavor composition comprises at least one or more compounds selected from the group consisting of 2,4,5-trimethyl-3-oxazoline, 2,4,5-trimethyloxazole, 2-methylthiazole, trans- or cis-2,4,5-trimethyl-2,5-dihydrothiazole, 2,4,5-trimethylthiazole, and tetramethylpyrazine.

For example, the flavour composition comprises at least three, or at least five, or at least seven or more compounds selected from the group consisting of 2,4,5-trimethyl-3-oxazoline, 4,5-dimethyloxazole, 2,4,5-trimethyloxazole, 2-methylthiazole, 4,5-dihydro-2-methylthiazole, transor cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine.

In one embodiment of the present invention, the flavour composition comprises 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine.

In one embodiment of the present invention, the mixture of i) cysteine and ii) acetoin is reacted at a pH between about 3.9 and 4.1, preferably at a pH of about 4.0. The acidic reaction conditions allow for a flavor composition with the preferred taste.

In one embodiment of the present invention, the mixture of i) cysteine and ii) acetoin is reacted in water.

Alternatively, the mixture is reacted in water in the presence of an oil, for example in the presence of high oleic sunflower oil (sunflower oil high oleic acid). Alternatively, the oil can be selected from the group consisting of MCT (medium-chain triglyceride) oil, coconut oil, peanut oil, olive oil, corn oil, or mixtures thereof, or others.

In one embodiment of the present invention, the mixture i) cysteine and ii) acetoin is reacted under elevated temperature, preferably at a temperature of 30 °C or higher, even more preferably at a temperature of about 40 °C, or up to about 55 °C. For example, the mixture is reacted at about 40 °C to 42 °C.

In one embodiment of the present invention, the mixture of i) cysteine and ii) acetoin is reacted for about 1 to 3 hours, preferably for about 2 hours. For example, the mixture is reacted for about 60 to 180 minutes, for example for about 70 min, or for about 80 min, or for about 110 min or for about 120 min.

In general, the temperature and reaction time can slightly vary dependent on the overall size of the reaction mixture. For example, the mixture of i) cysteine and ii) acetoin is reacted in a reaction mixture of 3 to 70 L at about 40 °C, or 42 °C or 55 °C for 2 h. At higher volumes, for example between 1000 L to 2000 L, the optimum reaction conditions might be adjusted. For example, the mixture of i) cysteine and ii) acetoin on an 1800 L scale is reacted at 47 °C for 70 min.

In one embodiment of the present invention, cysteine and acetoin is provided in a ratio between 1:5 and 5:1, preferably between 1:2 and 2:1, for example 1:1.75. With a relatively high amount of acetoin, the flavour profile has a dairy aspect. With a relatively low amount of acetoin, the flavour profile misses the characteristic meaty characteristics, for example the sweetness and creaminess of pork and ham.

In one embodiment of the present invention, the flavour composition is a meat flavour composition. The meat flavor composition can be admixed with other flavouring substances or flavouring mixtures or compositions. It can also be added or admixed directly to consumer products.

In one embodiment of the present invention, the flavour composition is a pork and ham flavour composition. The pork and ham flavor composition can be admixed with other flavouring substances or flavouring mixtures or compositions. It can also be added or admixed directly to consumer products.

As used herein, the term "flavoring substance" refers to any substance that is capable of imparting a detectable flavor impact, especially at a concentration below 0.1 wt.%, more preferably below 0.01 wt.%. For example, such flavoring substance may be selected from natural flavors, artificial flavors, spices, seasonings, and the like, synthetic flavor oils and flavor aromatics and/or oils, oleoresins, essences, distillates, and extracts derived from plants, leaves, flowers, fruits, and so forth, Generally, any flavor or food additive such as those described in Chemicals Used in Food Processing, publication 1274, pages 63-258, by the National Academy of Sciences, can be used. This publication is incorporated herein by reference.

In a further embodiment the flavor composition obtained by the method of the present invention is particularly useful in a wide variety of flavor mixtures and consumer products, in particular savoury food and beverages. In one embodiment, there is provided a flavour mixture comprising the flavour composition obtained by the method of the present invention.

For example, a flavor mixture comprises at least 0.01 wt.%, or at least 0.1 wt%, or at least 0.5 wt% of the flavoring substances based on the total weight of the flavor mixture, and between 0.1 and 5 wt% of the flavor composition obtained by the method of the present invention, preferably between 0.5 wt% and 2 wt.%, more preferably between 0.7 and 1.6 wt.% of the flavor composition obtained by the method of the present invention based on the total weight of the flavor mixture.

In a typical flavor mixture, the flavor composition obtained by the method of the present invention and flavoring substances are employed in a weight ratio within the range of 1: 50 to 1:250, preferably in a weight ratio of 1:60 to 1:150.

The flavor mixtures comprising the flavor composition obtained by the method of the present invention may suitably be prepared in the form of a liquid, a paste or a powder. For example, the flavor mixture is a free flowing powder.

Typical examples of flavor mixtures include savory flavorings, especially meat flavourings or flavourings for plant derived meat analogues, bouillons, processed meat or hybrid meat plant proteins sour/acid flavorings and others.

The flavor composition obtained by the method of the present invention can be used in flavor mixtures in conjunction with one or more ingredients or excipients conventionally used in flavor mixtures beside flavoring substances, for example carrier materials and other auxiliary agents commonly used in the art. Suitable excipients for flavor mixtures are well known in the art and include, for example, without limitation, solvents (including water, alcohol, ethanol, oils, fats, vegetable oil, and miglyol), binders, diluents, disintegrating agents, lubricants, flavor agents, coloring agents, preservatives, antioxidants, emulsifiers, stabilizers, flavor-enhancers, anticaking agents, and the like.

Examples of such carriers or diluents for flavor mixtures may be found in for example, "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J.M. Nikitakis (ed.), 1st ed., The Cosmetic, Toiletry and Fragrance Association, Inc., Washington, 1988.

Other suitable and desirable ingredients of flavor compositions are described in standard texts, such as "Handbook of Industrial Chemical Additives", ed. M. and I. Ash, 2nd Ed., (Synapse 2000).

In another aspect of the present invention, there is further provided a consumer product comprising the flavor composition obtained by the method of the present invention and a consumer product base.

By "product base" is meant the combination of all the usual art-recognized ingredients required for the particular consumable composition.

In another aspect of the present invention, there is provided a consumer product selected from the group consisting of foodstuffs and beverages, said consumer product comprising at least 10 ppm, preferably at least 50 ppm, more preferably at least 800 ppm or 10000 ppm the flavor composition obtained by the method of the present invention.

For example, said product contains at least 0.007 wt.%, more preferably at least 0.015 wt.%, even more preferably at least 0.035 wt.%, most preferably at least 0.1 wt.% of the flavor composition obtained by the method of the present invention. Typically, the aforementioned products will contain the flavor composition obtained by the method of the present invention in a concentration of not more than 0.1 wt.%, preferably of not more than 0.05 wt.%.

Typical examples of foodstuffs according to the present invention include soups, sauces, stocks, bouillons, broths, seasonings, noodles, chips, curls, meat products, plant based meat analogue product as vegan meat alternatives and beverages. A plant based meat analogue product is made from vegetable ingredients, and is also referred to as plant-based meat, vegan meat, meat substitute, mock meat, meat alternative, imitation meat, or vegetarian meat. Such a product can be provided in the form of Burger patties, sausages, cold cuts, schnitzel, minced meat, steak, nuggets, and others. Further examples also include alternative proteins or nonanimal proteins including hybrid proteins, cell culture derived products, insects or precision fermentation proteins.

The flavor composition obtained by the method of the present invention can be applied advantageously to impart desirable taste attributes to the aforementioned products, thereby improving the overall flavor quality of these products.

In another aspect of the present invention, there is provided a method to confer, enhance, improve or modify the flavor properties of a flavor mixture or a consumer product comprising adding to said mixture or consumer product the flavor composition obtained by the method of the present invention. For example, said flavor composition is added in an amount of at least 0.001 wt.%, preferably of at least 0.007 wt.%.

The invention is now further described with reference to the following non-limiting examples. These examples are for the purpose of illustration only and it is understood that variations and modifications can be made by one skilled in the art.

### EXAMPLES

### Example 1: Preparation of the flavor composition

Cysteine and acetoin were dissolved in 7.0 g of water. The pH of the reaction mixture has been adjusted by addition of aq. NaOH (30%). The reaction mixture was processed at the given temperature over a certain time.

The obtained flavor composition has been tasted in warm water comprising 0.3 % NaCl at 0.05 % by flavourists.

**Table 1:**

| **Entry** | **Cysteine** | **Acetoin** | **pH** | **T** | **t** | **taste** |
|---|---|---|---|---|---|---|
| 1 | 0.83 g | 0.87 g | 4.00 | 100 °C | 2h | meaty |
| 2 | 0.83 g | 0.87 g | 4.00 | 50 °C | 2h | ham, creamy |

The entries in the table above show, that in general, the provided flavor composition has a meaty character. A particular pork and ham characteristic is obtained, when the reaction temperature is kept around 50°C. At higher temperatures, for example at 100 °C the taste profile changes towards a general meaty profile.

The reaction of Cysteine and Acetoin has been conducted at larger scale at temperatures around 40-55°C. The following constituents have been identified by GC MS in the final product after spray drying. Major constituents of the final product are acetoin, cysteine and cystine, and further compounds have been identified:

**Table 2:**

| **Constituent** | **Trial 1, large scale, 42 °C (ppm)** | **Trial 2, large scale, 55 °C (ppm)** |
|---|---|---|
| acetoin | 86000.000 | 83400.000 |
| 4,5-dimethyloxazole | 2.470 | 9.900 |
| 2-methylthiazole | 1.100 | 12.000 |
| 3-mercapto-2-butanone | 4.070 | 6.190 |
| 2,4,5-trimethyl-3-oxazoline | 37.400 | 39.200 |
| 2,4,5-trimethyloxazole | 6.710 | 6.670 |
| 4,5-dihydro-2-methylthiazole | 2.740 | 6.670 |
| 2-methyl-3-thiazoline | 0.424 | 1.300 |
| cis-2,4,5-trimethyl-2,5-dihydrothiazole | 1.020 | 1.130 |
| trans-2,4,5-trimethyl-2,5-dihydrothiazole | 1.210 | 1.540 |
| 2-isopropylthiazolidine | 0.932 | 2.840 |
| tetramethylpyrazine | 0.312 | 1.060 |
| 2-acetyl-2-methyl-thiazolidine | 15.800 | 17.600 |
| 2,2-methyl-hydroxyethylthiazolidine | 23.300 | 16.900 |
| cysteine | 21200.000 | 15900.000 |
| cystine | 1020.000 | 2490.000 |
| **Total** | **108317.488** | **101913.000** |

For further comparison, entry 1 and 2 of Table 1 have been analyzed with a focus on the 5 constituents listed below. Those compounds are associated with a pork taste and or meat taste profile.

**Table 3:**

| **RT (min)** | **Constituent** | **Entry 1 (at 100°C) (ppm)** | **Entry 2 (at 50°C) (ppm)** |
|---|---|---|---|
| 13.87 | 2,4,5-trimethyl-3-oxazoline | 14.800 | 10.800 |
| 16.18 | 2,4,5-trimethyloxazole | 6.130 | n.d. |
| 17.42 | 2-methylthiazole | 1.080 | 1.670 |
| 22.22 | 2,4,5-trimethylthiazole | 2.680 | 1.970 |
| 25.32 | tetramethylpyrazine | 140.000 | 96.100 |
| | Total | **164.690** | **111.000** |

### Example 2: Comparison with other flavor in vegan bouillon base

The following samples were prepared in warm 0.3% Sodium Chloride solution:
A) vegan bouillon base
B) vegan bouillon base + 0.05% flavor compositions of example 1, trial 1
C) vegan bouillon base + 0.2% Lardon Flavour
D) vegan bouillon base + 0.2% Lardon Flavour + 0.05% flavor compositions of example 1, trial 1

The samples were tasted by a group of ten flavourists. The effect of flavor compositions of example 1 was clear and described as: it boosts the creamy and fatty profile and it makes the flavour profile more meaty and round; it provides a sweet cooked ham character.

### Example 3: Effect on plant based products

The flavour composition according to the invention has been used in combination with other flavouring in the following plant-based products:
1) Plant-based Salami
   Described as: cured ham, peppery, sour. A hot mouthfeel is also present.
2) Plant-based Coarse Sausage
   Described as: meaty, fatty fried, umami, peppery
3) Plant-based Frankfurter Sausage
   Described as: smoky, tallow, and fatty pork. Additional comments: at the first few bites, it was difficult to identify whether it was a plant-based or real meat frankfurter.
4) Plant-based Bacon Slices
   Described as: smoke sweet, tallow, cured ham, marrow beef and fatty fried.
5) Plant-based Bacon Cubes / Lardons
   Described as: cooked pork, tallow, smoky and umami.

The dosage of the flavor compositions of example 1, trial 1 in the total flavour mixture was between 0.7-1.6%. The dosage of the complete flavours containing the flavor compositions of example 1 trial 1, in the final application was between 1%-3.5%. Overall, the flavor compositions of example 1 trial 1, provides fatty porky meaty mouthfeel and it has tonalities of sweet cooked ham.

## Claims

1. A method for preparing a flavour composition, comprising the steps of
a) providing a mixture of
i) cysteine, and
ii) acetoin; and
b) reacting said mixture to a flavor composition;
wherein the flavour composition comprises at least one or more compounds selected from the group consisting of 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine.

2. The method according to claim 1, wherein the flavour composition comprises at least three, or at least five, or at least seven or more compounds selected from the group consisting of 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole and tetramethylpyrazine.

3. The method according to claim 1, wherein the flavour composition comprises 2,4,5-trimethyl-3-oxazoline, 4,5-dimethyloxazole, 2,4,5-trimethyloxazole, 2-methylthiazole, 4,5-dihydro-2-methylthiazole, trans- or cis-2,4,5-trimethyl-2,5-dihydrothiazole, 2-methyl-3-thiazoline, 2-acetyl-2-methyl-thiazolidine, 2-isopropylthiazolidine, 2,4,5-trimethylthiazole, and tetramethylpyrazine.

4. The method according to any one of the previous claims, wherein the mixture is reacted at a pH between about 3.9 and 4.1, preferably at a pH of about 4.0.

5. The method according to any of the previous claims, wherein the mixture is reacted in water, optionally in the presence of an oil, for example in the presence of high oleic sunflower oil.

6. The method according to any one of the previous claims, wherein the mixture is reacted under elevated temperature, preferably at a temperature of 30 °C or higher, even more preferably at a temperature of about 40 °C or higher.

7. The method according to any one of the previous claims, wherein the mixture is reacted for about 1 to 3 hours, preferably for about 2 hours.

8. The method according to any one of the previous claims, wherein cysteine and acetoin is provided in a ratio between 1:5 and 5:1, preferably between 1:2 and 2:1, for example 1:1.75.

9. The method according to any one of the previous claims, wherein the flavour composition is a meat flavour composition or a pork flavour composition.

10. A flavour mixture comprising the flavour composition obtained by the method of any one of the previous claims.

11. The flavour mixture according to claim 10, wherein the flavour composition is comprised in between 0.001 and 0.02 wt% based on the total weight of the flavor mixture.

12. A consumer product comprising the flavour composition obtained by the method of any one of the claims 1 through 9 and a consumer product base.

13. The consumer product according to claim 12, comprising at least 700 ppb, preferably at least 1600 ppb, more preferably at least 3500 ppb or 8000 ppb of the flavour composition obtained by the method of any one of the claims 1 through 9.

14. The consumer product according to claim 12 or 13 wherein the consumer product is selected from foodstuff and beverages.

15. A method to confer, enhance, improve or modify the flavor properties of a flavor mixture or a consumer product, which method comprises adding to said mixture or consumer product the flavour composition obtained by the method of any one of the claims 1 through 9.
